# EUROPEAN PATENT SPECIFICATION

(11) **EP 0 493 909 B1**
(45) Date of publication and mention of the grant of the patent: **17.05.1995**
(21) Application number: 91311525.9
(22) Date of filing: 11.12.1991
(51) Int. Cl.: G01S 7/539, G06T 5/00, G06T 7/00

(54) **Image processing system for producing an attenuation map of a scanned image**
Bildverarbeitungssystem zur Erzeugung einer Dämpfungskartographie aus einem abgetasteten Bild
Système de traitement d'image pour produire une cartographie d'atténuation à partir d'une image de balayage

(30) Priority: 31.12.1990 IL 96842
(43) Date of publication of application: 08.07.1992
(73) Proprietor: International Business Machines Corporation, Armonk, N.Y. 10504 (US)
(72) Inventor: Walach, Eugene, Kiriat Motzkin 26418 (IL)
(74) Representative: Burt, Roger James, Dr.

(56) References cited:
- IEEE TRANSACTIONS ON BIO-MEDICAL ENGINEERING vol. 36, no. 2, February 1989, NEW YORK US pages 211 - 221 E. WALACH ET AL. 'Local attenuation images based on pulsed-echo ultrasoun scans'
- TRANSACTIONS OF THE INSTITUTE OF ELECTRONICS, INFORMATION AND COMMUNICATION ENGINEERS OF JAPAN vol. 72, no. 9, September 1989, TOKYO JP pages 1003 - 1009 F. MORII 'Stastical performance of image thresholding using Lloyd's algorithm'

## Description

The present invention relates to an image processing system for generating an attenuation map of a scanned image and to an ultrasonic scanning and imaging system incorporating said image processing system.

An ultrasonic scanning and imaging system comprises a source of ultrasonic radiation which is formed into a beam and radiated into the object to be imaged, a receiver of energy reflected from the object and means for imaging the received energy. Of particular interest to the present invention are ultrasonic imaging systems (called B-Scans), where both source (transmitter) and receiver are located at the same place.

The source radiates a short pulse of ultrasonic energy. This radiation is selectively absorbed and reflected by different parts of the object according to their density and other acoustic properties. As a result of the reflection, acoustic echo is created. These echo signals are received at the receiver and stored in the memory as a function of time of echo arrival. Since, frequently, the speed of sound in the object is known (for biological tissues it is about 1500 m/sec), from the time of arrival of the echo one can compute the distance between the transceiver (transmitter and receiver) to the part of the object, which actually caused the reflection. Hence, by looking at the images of echoes received form the object one can deduce what is the internal structure of the object.

Ultrasonic scanning and imaging systems have a particular use in scanning organs of the human body to produce images of internal structure of biological tissues. Such images can be used by skilled medical personnel to identify abnormal features in certain organs, this information be used subsequently by physicians as part of a medical diagnostic process.

Despite the vital importance of existing ultrasonic images, the usefulness of this technique is limited by the fact that traditional ultrasonic images are of qualitative nature, only. Indeed, each point of the image provides an amplitude of the echo received from the certain point inside the body. However, echo received from that point depends not only on reflectivity at that point but also on absorption and diffraction of ultrasonic energy along the path from that point to the transceiver. In other words, an image of each point inside the body is distorted by the impact of the tissue along the route of the ultrasonic ray.

In order to mitigate this distortion, so called, time-gain compensation curves are employed. The idea is that the operator, subjectively, sets compensation factors so that signals coming from deep within the body will be amplified relative to the signals coming from the area close to the surface. As a result the image would have a homogenous nature, and then, once the aforementioned distortions are removed, presumably, the image depicts only local reflectivity properties. Unfortunately, application of this approach implies that there is no absolute meaning to the amplitude values per se. In other words, it is impossible to say that healthy tissue should produce echo amplitudes in a given range, and anything outside this range indicates an abnormality. The analysis of this image by a physician to identify information useful as part of a diagnostic process is based on the subjective judgement of the physician, who, usually looks for certain types of in-homogeneities inside the image, which might, in turn, indicate an illness in the tissue under consideration.

It would be desirable to produce images which differ from conventional reflectivity imaging by addressing different acoustical features providing direct quantitative measurements of local tissue features, which in turn will provide a direct indication of various abnormalities. As mentioned above, ultrasonic energy is absorbed and diffracted by the object to be imaged. As a result, as an ultrasonic ray passes through each point of the body, its energy is diminished (or attenuated). The degree of attenuation per unit of distance will vary depending on the features characteristic to the given point of the object. It has been proposed, therefore, to image the local tissue attenuation coefficient.

This type of approach is discussed in a paper by E Walach, C N Liu, R C Waag and K J Parker entitled "Quantitative Tissue Characterisation Based on Pulsed-Echo Ultrasound Scans", published in IEEE Transactions on Biomedical Engineering Vol BME-33, No 7, July 1986 at pages 637 - 643 (R1), and in a paper by E Walach, A Shmuewitz, Y Itzchak and Z Heyman entitled "Local Tissue Attenuation Images Based on Pulsed-Echo Ultrasound Scans", published in IEEE Transactions on Biomedical Engineering Vol BME-36, No 2, February 1989 at pages 211 - 221 (R2).

These papers teach that by measuring, and displaying, the degree of attenuation for each point of an ultrasound image, important information regarding the internal structure of an imaged object can be discerned by the medical practitioner for subsequent use in medical diagnosis. However, the existing techniques do not produce images which are easy to interpret by the physician and there is a need to improve the interpretability of the images.

In accordance with the invention therefore, there is provided an image processing system for generating, from a scanned image comprising an array of source image pixels, an attenuation map which comprises an array of destination pixels representative of attenuation data extracted from the scanned image, the image processing system comprising macro-segmentation logic for defining macro-segments of the scanned image and attenuation estimation logic for estimating local attenuation coefficient values for the macro-segments from the amplitude values of the scanned image pixels within the macro-segments, characterised by micro-segmentation logic for determining average amplitude values for micro-segments of the image, the micro-segments being smaller than the macro-segments, and means for estimating the attenuation coefficient values using the average amplitude values of the micro-segments.

An image processing system in accordance with the present invention enables individual features to be more clearly identified in the images produced thereby with the result that it is more easy for the operator of the system to interpret the images. The invention does this by enabling the impact of amplitude noise to be reduced by processing the image on a micro-segment basis. A side benefit of the invention is that computational complexity is reduced, with a corresponding increase in computational efficiency.

Preferably, the micro-segmentation logic operates, in one or more iterations, to generate first and second average pixel amplitude values for first and second groups of pixels within a micro-segment by:
- determining a threshold value as the average pixel amplitude value for the pixels of the micro-segment; and
- splitting the micro-segment into first and second groups of pixels according to the amplitude value of individual pixels with respect to the threshold value, determining the average attenuation value for each source pixel to be the average amplitude value for the group to which the pixel belongs.

the first and second average amplitude values for the micro-segment used being those determined after said one or more iterations.

Although the present invention is not limited to the processing of ultrasound images, it is particularly suitable for processing such images.

Accordingly, the invention also provides in ultrasonic scanning and imaging system comprising ultrasound scanning apparatus for generating image signals representative of a scan of an object and an image processing system as claimed in any preceding claim for processing the image signals generated by the ultrasound scanning apparatus.

A particular example of the invention will be described hereinafter with reference to the accompanying drawings in which:
- Figure 1 is an schematic block diagram of processing logic from an image processing system in accordance with the invention;
- Figure 2 is a schematic block diagram of a personal computer as one possible implementation of all image processing system in accordance with the invention;
- Figure 3 is an example of an ultrasound scanning and image processing system in accordance with the invention.

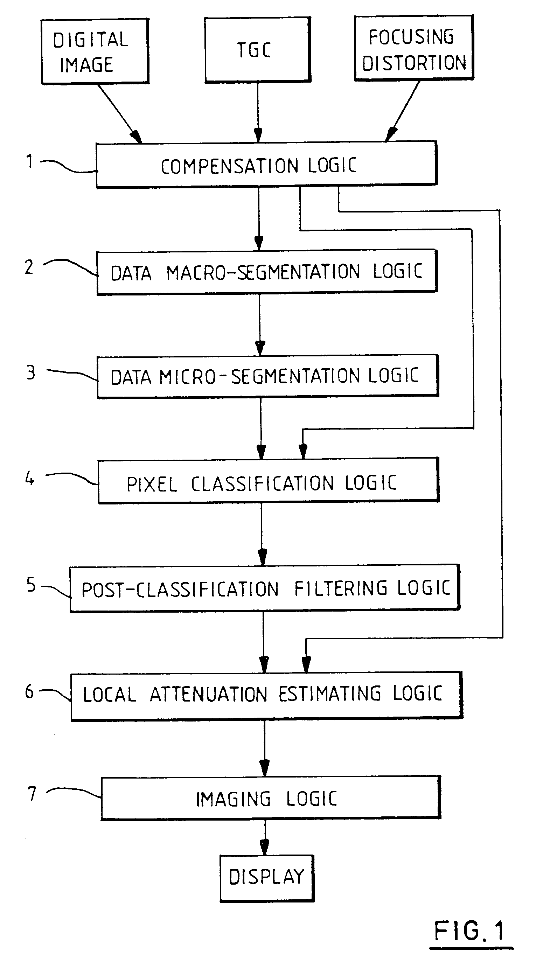

Figure 1 is an schematic block diagram of processing logic from an image processing system in accordance with the invention. The processing logic comprises the following elements:
1. Compensation Logic
2. Data Macro-segmentation Logic.
3. Data Micro-segmentation Logic.
4. Pixel Classification Logic.
5. Post-classification Filtering Logic.
6. Local Attenuation Estimation Logic .
7. Imaging Logic

The compensation logic 1 can receive the data to be processed from any suitable source. For example, it can receive it directly from a primary image source, for example from ultrasound scanning apparatus. Alternatively, it could receive the data indirectly from a data transmission channel from a remote primary source, or from an image buffer or memory, if the image data has been stored before processing.

The compensation logic 1 compensates for distortions in the received data includes the impact of the Time Gain Compensation Curve (TGC) and focusing distortion (see Fig. 1). This type of compensation is typically carried out in prior art systems as described above. In other words, compensation factors are set so that signals coming from deep within the body will be amplified relative to the signals coming from the area close to the surface.

The data macro-segmentation logic 2 receives the data from the compensation logic either directly, or indirectly via a buffer. The macro segmentation logic, which performs the functions described as Data Segmentation on pages 212 and 213 in reference R2 above, computes a local attenuation coefficient for every point on the image. In other words, a block of data containing its immediate vicinity is picked. An average attenuation of the entire block is computed and assigned to the pixel (picture element) at the centre. In such a manner a transformed image is constructed so that grey levels of the new image represented the magnitudes of the corresponding attenuation coefficients.

The image data processed here forms the image before any geometrical transformation has been performed (i.e. all the ultrasonic A-Scan rays are organised in a single rectangular array). The data has, however, been compensated by the compensation logic 1 for attenuation effects and other physical effects during capture of the array of source image pixels.

In the prior art, in order to generate the local attenuation coefficient for each pixel, the aforementioned procedure is simply performed on a pixel by pixel basis. However, in an image processing system in accordance with the present invention, micro-segmentation logic 3 is provided which enables the image to be processed on a micro-segment, rather than a pixel by pixel basis. In the preferred embodiment, the micro-segmentation logic 3 divides the image into (4x4) mutually exclusive blocks (micro-segments). Since each micro-segment is very small the assumption is made that there can only be at most 2 different tissues present in any given micro-segment. In order to find the optimal partitioning of the micro-segment into the individual tissue areas the micro-segmentation logic proceeds as follows:
a) Each micro-segment is split into two groups: pixels having amplitude above the block average, and pixels having amplitudes below the block average.
b) An averages of "high-" and "low-groups" are computed and then the average AV between these 2 values is obtained.
c) The Micro-segment is again split into 2 groups: pixels having amplitudes above AV and pixels having amplitudes below AV.
   Steps b and c are then repeated with computation proceeding in an iterative manner until predetermined number of iterations is completed.

Once partition of the micro-segment is completed, estimation of local attenuation will be performed only once for each group. In other words all the pixels belonging to the same group will be assigned the same attenuation value.

This approach provides a number of advantages. For example, it reduces amplitude discrepancies between pixels within the micro-segment, averaging out some of the noise present within each micro-segment group, with the result that overall image quality is improved. In addition, as the attenuation coefficient is estimated at most twice for each micro-segment (instead of 16 times required for all 16 pixels of the micro-segment), computational burden is reduced by a significant amount (approximately by a factor of 10).

Because of the way in which the micro-segment partitioning is performed, it has been found that no degradation in the overall resolution and subjective image quality is noticeable.

For the next stage in the process, the classification of pixels, relatively large data blocks (i.e. the segments) have to be chosen in order to achieve a reliable estimation of the attenuation coefficients.

The pixel classification logic 4 operates on data blocks having 17 pixels in the lateral direction (about 4mm) and 65 pixels (about 16 mm) in the axial direction. Naturally, an increase in the size of the data block will improve the quality of the estimation (reduced expected estimation error for the uniform tissue area). However, at the same time image resolution will be decreased. The choice of the size of the data blocks is based on considerations regarding the expected value of the attenuation estimation error.

This choice creates the possibility of having, at the same block, pixels corresponding to different tissue areas. Since only a single average attenuation value is computed for the entire block, this in-homogeneity would result in some degree of distortion of the result. In order to avoid this undesirable effect, each data block is split into two groups: pixels which belong to the range appropriate to the tissue under consideration, and pixels which are out of range and should be discarded. The classification has been performed based on the amplitude of each pixel. The values close (say +/- 6 db) to the amplitude of the point at the centre are defined as the domain of echoes likely to be received from the given tissue.

It should be noted that it is advantageous to perform the classification process on data compensated for the attenuation effects (otherwise, even in entirely homogenous area, the beginning of the block might be classified differently than the end of the block, which has been attenuated by all the pixels of the given block). That means that some idea about the value of attenuation coefficient is required before the classification process is performed. Thus the pixel classification logic 4 selects pixels within each segment (macro-segment) having values within a predetermined range of the average amplitude value for that segment, the pixel classification being performed on the basis of the first and second average amplitude values for respective micro-segments determined by the micro-segmentation logic and the compensated data output by the compensation logic 1.

A first solution to this is to computing attenuation in iterative manner, that is with a rough estimate of local attenuation being computed first. This value is used for compensating the data for attenuation effects. Then improved classification is performed, and then more refined value of attenuation coefficient is computed. The entire process is repeated until no significant changes in estimated attenuation value occur. Some virtual attenuation is assumed and used for classification purposes only. In particular, one can use the values set by the operator for time gain compensation curves. In other words, classification process will be performed on the data uncompensated for the effects of TGC. Accordingly, as depicted in Fig 1, pixel classification process receives 2 inputs: results of macro- and micro segmentations, and original data, where TGC effects have not been removed, yet.

As a result of the classification process, the macro-segment is transformed to a binary map A with 1 standing in place of "in-range" pixels, and 0 in place of "out-of range" pixels. The next task is to reduce the impact of classification errors by performing non-linear filtering of this binary block.

The post-classification filtering logic 5 first eliminates short sequences of "out of range" samples in order to reduce the impact of the classification errors (say runs of up to 4 consecutive O will be classified as 1). Let us designate the resulting binary image as B. In each line of B the longest run of 1 is chosen creating a new image C. Finally the image D is created, which is a Boolean "AND" between A and C. The subsequent computations are performed utilising only pixels, which correspond to the value 1 in image D. In other words it is assumed that only pixels of image C belong the homogenous area under consideration. However, even for the homogenous areas, the existence of short runs of erroneous data can be accommodated.

Once the relevant segment of data has been established, the local attenuation estimating logic determines the local attenuation values. In doing so, it is assumed that distribution of the echo amplitudes is Raleigh and the echo attenuation coefficient can be estimated either: based on the maximum likelihood principle or a Prony Method.

In both cases attenuation coefficient is estimated based on the assumption that all "in-range" pixels belong to a homogenous area, and therefore differences in the amplitude of echoes received from consecutive pixels must be due to the attenuation effects only.

It should be noted that, as explained above, at the end of segmentation and classification stages, long blocks of data are obtained which come from a homogenous area. However, each block can include few "out of range" points. Such "out of range" points are assumed to be due to errors and therefore excluded from the computation process i.e. average attenuation for each block is computed assuming that certain echo amplitudes are unknown.

In the above, the creation of a mapping from the domain of the echo amplitudes to the domain of attenuation coefficients has been described. The last stage of the process is performed by imaging logic 7 for generating an image for display. This process consists of performing the translation from the data space (a rectangular array of A-Scan rays) to the final image space representing actual geometrical locations of every point (similar to the form of conventional B-Scan).

In general, bright colours stand for high attenuation, and dark areas represent low attenuation. Theoretically, such an image contains all the information regarding the distribution of the attenuation coefficient inside the tissue under consideration. However it is important to organise the display in a manner, which would emphasise the features of interest.

In order to achieve this objective, different approaches are adopted for a grey level display, and for a colour display

For a grey level display, nonlinear look-up tables (LUT) are utilised in order to shift the value corresponding to the normal toward the centre of the display range. For instance, while viewing a liver on a monitor having 256 grey-levels , the value corresponding to the normal liver attenuation (about 0.5 db/cm MHz) will correspond to the value of 128.

For a colour display, various features are displayed simultaneously, which, together, provide important information for the user. In order to achieve this goal, each feature is displayed in its own colour. For instance, attenuation image can be assigned to green colour component. Conventional ultrasonic image will be displayed in red and blue. A look-up table is chosen for each colour such that for healthy individuals all the colour components will balance each other and as a result a grey image will be obtained. However, every deviation from the normal will cause the lack of balance such that for low attenuation the image will be tinted red and for a high attenuation the image will be tinted green.

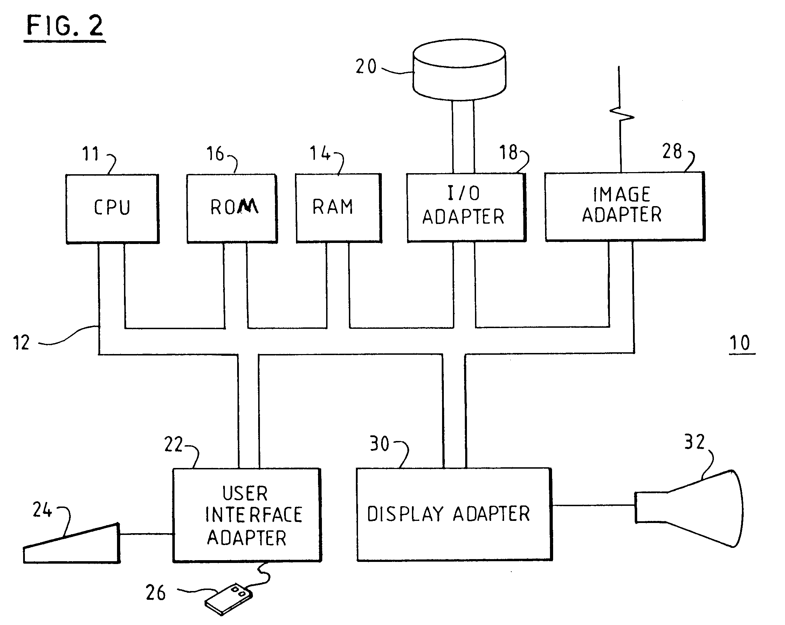

Figure 2 is a schematic block diagram of a image processor 10 in the form of a personal computer comprising a number of different system units connected via a system bus 12. Connected to the system bus is a microprocessor 11, random access memory 14, read only memory 16, a user interface adapter 22, a display adapter 30, an I/O adapter 18 and an image adapter 28. The user interface adapter is used to connect a keyboard 24 and/or other user input devices, such as a mouse 26, to the system bus. The display adapter connects the system bus to a display device 32. The I/O adapter likewise provides a connection between other input/output devices 20 (eg. DASDs) and the system bus. The image adapter enables a source of image data such as an ultrasonic scanner (not shown) to be connected to the personal computer. Other connections devices could be provided, for example a communications adapter (not shown) for allowing the personal computer to be connected to and to communicate with an external processor or processors such as a host processor (not shown).

In this embodiment, the logic described above is implemented by software logic running on the hardware shown in Figure 2. However, it will be appreciated that the logic described above could be implemented at least in part by special purpose hardware logic.

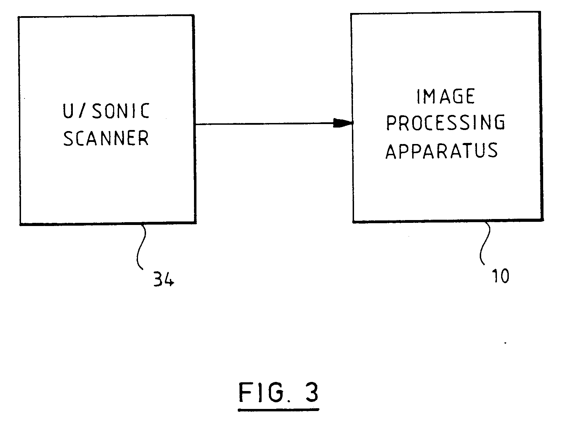

Figure 3 is a schematic block diagram illustrating an ultrasonic scanning system comprising an ultrasonic scanner 34 and the image processor 10.

## Claims

1. Image processing system for generating, from a scanned image comprising an array of source image pixels, an attenuation map which comprises an array of destination pixels representative of attenuation data extracted from the scanned image, the image processing system comprising macro-segmentation logic (2) for defining macro-segments of the scanned image and attenuation estimation logic (6) for estimating local attenuation coefficient values for the macro-segments from the amplitude values of the scanned image pixels within the macro-segments, characterised by the system further comprising micro-segmentation logic (3) for determining average amplitude values for micro-segments of the image, the micro-segments being smaller than the macro-segments, and means for estimating the attenuation coefficient values for the macro-segments using the average amplitude values of the micro-segments.

2. An image processing system as claimed in Claim 1 wherein the micro-segmentation logic (3) is operable to generate in one or more iterations first and second average pixel amplitude values for first and second groups of pixels within a micro-segment by:
- determining a threshold value as the average pixel amplitude value for the pixels of the micro-segment; and
- splitting the micro-segment into first and second groups of pixels according to the amplitude value of individual pixels with respect to the threshold value, determining the average attenuation value for each source pixel to be the average amplitude value for the group to which the pixel belongs,
the first and second average amplitude values for the micro-segment used being those determined after said one or more iterations.

3. An image processing system as claimed in Claim 2 comprising compensation logic (1) arranged to compensate for attenuation effects during capture of the array of source image pixels, the macro-segmentation logic (2) and the micro-segmentation logic (3) being arranged to operate on the compensated data output by the compensation logic (1).

4. An image processing system as claimed in Claim 3 comprising pixel classification logic (4) operable to select pixels within each macro-segment having values within a predetermined range of the average amplitude value for that macro-segment, the pixel classification being performed on the basis of the first and second average amplitude values for respective micro-segments determined by the micro-segmentation logic and the compensated data output by the compensation logic (1).

5. An image processing system as claimed in Claim 4 comprising post-classification filtering logic (5) operable to eliminate short sequences of samples determined by the pixel classification logic (4) not to be within the predetermined range of the appropriate average amplitude value for a segment.

6. An ultrasonic scanning and imaging system comprising ultrasound scanning apparatus for generating image signals representative of a scan of an object and an image processing system as claimed in any preceding claim for processing the image signals generated by the ultrasound scanning apparatus.

## Patentansprüche

1. Bildverarbeitungssystem zur Erzeugung einer Dämpfungskartographie aus einem abgetasteten Bild, das eine Matrix von Quellenbild-Pixeln enthält, wobei die Dämpfungskartographie eine Matrix von Ziel-Pixeln enthält, die für aus dem abgetasteten Bild entnommene Dämpfungsdaten repräsentativ sind, wobei das Bildverarbeitungssystem eine Makro-Segmentierungs-Logik (2) zur Definition von Makro-Segmenten aus dem abgetasteten Bild und eine Dämpfungs-Schätzlogik (6) zur Schätzung der lokalen Dämpfungskoeffizienten-Werte für die Makro-Segmente aus den Amplituden-Werten der Pixel des abgetasteten Bildes innerhalb der Makro-Segmente umfaßt, dadurch gekennzeichnet, daß das System desweiteren eine Mikro-Segmentierungs-Logik (3) umfaßt, zur Bestimmung durchschnittlicher Amplituden-Werte für Mikro-Segmente des Bildes, wobei die Mikro-Segmente kleiner sind, als die Makro-Segmente, und Mittel zum Schätzen der Dämpfungskoeffizienten-Werte für die Makro-Segmente, unter Verwendung der durchschnittlichen Amplituden-Werte der Mikro-Segmente.

2. Ein Bildverarbeitungssystem nach Anspruch 1, bei dem die Mikro-Segmentierungs-Logik (3) in ein oder mehreren Iterationen erste und zweite durchschnittliche Pixel-Amplituden-Werte für erste und zweite Gruppen von Pixeln innerhalb eines Mikro-Segments erzeugen kann, durch:
- Bestimmen eines Schwellenwerts als durchschnittlichen Pixel-Amplituden-Wert für die Pixel des Mikro-Segments; und
- Unterteilen des Mikro-Segments in erste und zweite Gruppen von Pixeln gemäß dem Amplituden-Wert einzelner Pixel im Hinblick auf den Schwellenwert, Bestimmen des durchschnittlichen Dämpfungswerts für jedes Quellen-Pixel als durchschnittlichen Amplituden-Wert für die Gruppe, zu der das Pixel gehört,
wobei der erste und der zweite durchschnittliche Amplituden-Wert für das verwendete Mikro-Segment derjenige ist, der nach den genannten ein oder mehreren Iterationen bestimmt wird.

3. Ein Bildverarbeitungssystem nach Anspruch 2, eine Ausgleichs-Logik (1) umfassend, zum Ausgleich von Dämpfungseffekten während des Erfassens der Matrix von Quellenbild-Pixeln, wobei die Makro-Segmentierungs-Logik (2) und die Mikro-Segmentierungs-Logik (3) so angeordnet sind, daß sie mit den ausgeglichenen Daten arbeiten, die von der Ausgleichslogik (1) ausgegeben werden.

4. Ein Bildverarbeitungssystem nach Anspruch 3, eine Pixel-Klassifizierungslogik (4) umfassend, welche Pixel innerhalb jedes Makro-Segments auswählen kann, das Werte innerhalb eines vorbestimmten Bereichs des durchschnittlichen Amplituden-Werts für dieses Makro-Segment hat, wobei die Pixel-Klassifizierung auf der Basis des ersten und zweiten durchschnittlichen Amplituden-Werts für die jeweiligen Mikro-Segmente durchgeführt wird, die von der Mikro-Segmentierungs-Logik bestimmt werden, und von den ausgeglichenen Daten, die von der Ausgleichs-Logik (1) ausgegeben werden.

5. Ein Bildverarbeitungssystem nach Anspruch 4, eine Post-Klassifizierungs-Filter-Logik (5) umfassend, die kurze Sequenzen von Abtastwerten beseitigen kann, bei denen die Pixel-Klassifizierungs-Logik (4) festgestellt hat, daß sie nicht innerhalb des vorbestimmten Bereichs des entsprechenden durchschnittlichen Amplituden-Werts für ein Segment liegen.

6. Ein Ultraschallabtast- und -bilddarstellungssystem mit Ultraschallabtastgerät zur Erzeugung von Bildsignalen, die für eine Objektabtastung repräsentativ sind, und ein Bildverarbeitungssystem nach jedem der vorangehenden Ansprüche zur Verarbeitung der von dem Ultraschallabtastgerät erzeugten Bildsignale.

## Revendications

1. Système de traitement de données permettant d'engendrer, à partir d'une image balayée comprenant un réseau de pixels d'image source, une représentation d'atténuations comprenant un réseau de pixels de destination qui représentent les données d'atténuations extraites de l'image balayée, le système de traitement d'image comprenant une logique (2) de macro-segmentation permettant de définir des macro-segments de l'image balayée et une logique d'estimation d'atténuation (6) permettant d'estimer les valeurs de coefficients d'atténuation locale concernant les macro-segments à partir des valeurs d'amplitude des pixels d'images balayées au sein des macro-segments, caractérisé en ce que le système comprend en outre une logique (3) de micro-segmentation permettant de déterminer des valeurs d'amplitudes moyennes pour des micro-segments de l'image, les micro-segments étant plus petits que les macro-segments, et des moyens pour estimer les valeurs de coefficients d'atténuation des macro-segments en utilisant les valeurs d'amplitude moyenne des micro-segments.

2. Système de traitement d'image selon la revendication 1 dans lequel la logique (3) de micro-segmentation fonctionne pour engendrer en une ou plusieurs itérations, des premières et secondes valeurs d'amplitudes moyennes de pixel pour des premiers et seconds groupes de pixels au sein d'un micro-segment par :
- détermination d'une valeur de seuil comme valeur d'amplitude de pixel moyen pour les pixels du micro-segment ; et
- scission du micro-segment en un premier et un second groupes de pixels en fonction de la valeur de l'amplitude de chaque pixel par rapport à la valeur de seuil, détermination de la valeur d'atténuation moyenne pour chaque source de pixel comme étant la valeur d'amplitude moyenne pour le groupe auquel appartient le pixel,
les premières et secondes valeurs d'amplitudes moyennes pour le micro-segment utilisé étant celles déterminées après la ou lesdites itérations.

3. Système de traitement d'image selon la revendication 2 comprenant une logique (1) de compensation, définie pour compenser les effets d'atténuation durant la capture de l'ensemble de pixels d'image source, une logique (2) de macro-segmentation et une logique de micro-segmentation (3) étant conçues pour fonctionner sur les données de sortie compensées par la logique (1) de compensation.

4. Système de traitement d'image selon la revendication 3 comprenant une logique (4) de classification de pixels fonctionnant pour choisir les pixels au sein de chaque micro-segment ayant les valeurs dans une gamme pré-déterminée de valeurs d'amplitude moyenne pour ledit macro-segment, la classification de pixels étant réalisée sur la base des premières et secondes valeurs d'amplitude moyenne pour les micro-segments respectifs déterminées par la logique de micro-segmentation et les sorties de données compensées par la logique (1) de compensation.

5. Système de traitement d'image selon la revendication 4 comprenant une logique (5) de filtrage post-classification fonctionnant pour éliminer les courtes séquences d'échantillons déterminées par la logique (4) de classification de pixels n'étant pas dans une gamme pré-déterminée d'amplitudes moyennes appropriées pour un segment.

6. Système de balayage ultra-sonique et de mise en image comprenant un dispositif de balayage à ultra-sons pour engendrer des signaux d'image représentant un objet balayé et un système de traitement d'image selon l'une des revendications précédentes pour traiter les signaux d'image engendrés par le dispositif de balayage à ultra-sons.
